# DEMANDE DE BREVET EUROPEEN

(11) **EP 4 797 477 A1**
(43) Date de publication de la demande: **26.08.2026**
(21) Numéro de dépôt: 26159525.0
(22) Date de dépôt: 19.02.2026
(51) Int. Cl.: H02J 3/00, H02J 13/00, H02J 13/10, H02J 13/12, H02J 103/30, H02J 103/35

(54) **METHODE DE DETERMINATION DES CAPACITES D'ACCUEIL D'UN SYSTEME ELECTRIQUE POUR DES INSTALLATIONS DE STOCKAGE D'ENERGIE ELECTRIQUE**

(30) Priorité: 20.02.2025 FR 2501789
(71) Demandeur: Electricité de France, 75008 Paris (FR)
(72) Inventeur: FERREIRA, Quentin, 92160 ANTONY (FR); BARAFFE, Héloïse, 92370 CHAVILLE (FR); LEBOURG, Quentin, 91300 MASSY (FR); KALLALA, Houssem, 92160 ANTONY (FR)
(74) Mandataire: Regimbeau

(57) **Abrégé**

L'invention concerne un procédé de détermination de capacités d'accueil d'installations de stockage d'énergie électrique pour le réglage de fréquence dans un réseau de transport d'électricité, dans lequel, à partir de la connaissance d'une modélisation du réseau de transport et de situations dimensionnantes identifiées pour celui-ci, dans lequel pour différentes combinaisons de situations dimensionnantes et de schémas de répartition d'installations de stockage d'énergie, on détermine,
a) celles qui génèrent ou aggravent les contraintes de transit dans au moins une des hypothèses de perte de production ou de charge,
b) celles qui ne génèrent et n'aggravent les contraintes de transit dans aucune des hypothèses de perte de production ou de charge.
et
on déduit de ces résultats une évaluation des capacités d'accueil conjointes aux différents points d'installation potentiels du réseau de transport.

## Description

### Domaine technique général et art antérieur

L'invention concerne la planification des réseaux de transport d'électricité.

Plus particulièrement, elle propose un procédé de détermination de capacités d'accueil d'installations de stockage d'énergie électrique dans un réseau de transport d'électricité.

Un système électrique est composé d'un réseau de transport, qui achemine l'électricité sur de longues distances, et de réseaux de distribution, qui acheminent l'électricité sur de courtes distances. Dans un système électrique à courant alternatif avec machine(s) synchrone(s), un déséquilibre entre la production et la consommation d'électricité dans le système électrique se traduit par l'apparition d'un couple électromécanique sur les machines synchrones, entraînant une diminution de leur vitesse de rotation (si la consommation est supérieure à la production), ou une accélération de leur vitesse de rotation (si la consommation est plus faible que la production). La fréquence électrique étant proportionnelle à la vitesse de rotation des machines synchrones, un déséquilibre entre la production et la consommation d'électricité se traduit par une variation de la fréquence électrique du système. Afin que la fréquence électrique revienne à sa valeur nominale, il faut donc retrouver l'équilibre entre la production et la consommation d'électricité, et s'assurer que les machines synchrones retrouvent leur vitesse de rotation nominale.

Les installations de stockage d'énergie électrique intervenant dans le réglage primaire de fréquence sont pilotées afin d'injecter ou de soutirer de la puissance (autrement dit, produire ou consommer de l'électricité) lorsque la fréquence s'écarte de sa valeur nominale, et ainsi aident à maintenir l'équilibre production-consommation dans le système électrique.

Les perturbations ou incidents les plus fréquents et impactants sont ceux qui engendrent une production très inférieure à la consommation d'électricité (par exemple, la déconnexion soudaine et fortuite d'une installation de production qui injectait de la puissance sur le réseau). Les futures installations de stockage, que le gestionnaire de réseau souhaite déployer en différents points du système électrique, devront donc principalement fournir une réserve primaire de fréquence/puissance dite « à la hausse », c'est-à-dire se décharger (fonctionner en injection) en cas d'un déficit soudain de la production sur le système électrique. Les événements les plus critiques pourront entraîner une décharge à puissance maximale des installations de stockage, une situation que le système électrique devra être capable de supporter.

Une fois l'équilibre production-consommation rétablie, les futures installations de stockage devront restaurer leur réserve primaire pour répondre à tout nouvel incident. Cela signifie qu'elles devront pouvoir aussi se recharger (fonctionner en soutirage) en respectant les réglementations en vigueur, qui peuvent varier selon les méthodes de pilotage et/ou les conditions imposées par le gestionnaire du réseau. De ce fait, la recharge des installations de stockage est nécessaire mais ne se fera pas forcément à puissance maximale et/ou à des moments préjudiciables pour le système électrique.

Le réseau de transport doit être en mesure de faire transiter les puissances supplémentaires injectées/soutirées par ces installations de stockage. Afin de limiter le coût du déploiement de telles installations de stockage, il convient de les raccorder au niveau de nœuds électriques disposant de capacités d'accueil en injection et en soutirage. La capacité d'accueil en injection (respectivement, en soutirage) en un point précis d'un système électrique peut être définie comme la puissance supplémentaire maximale qu'il est possible d'injecter (respectivement, soutirer) en ce nœud sans causer des contraintes électriques sur le reste du système électrique (par exemple, sans causer des courants électriques supérieurs aux capacités thermiques des liaisons électriques).

La détermination de la capacité d'accueil en un point précis est nécessairement complexe car elle implique de connaitre les situations contraignantes vis-à-vis du système électrique et donc potentiellement d'évaluer un grand nombre d'états possibles du système électrique, par exemple : différents niveaux de production et de consommation en chaque nœud électrique, différentes installations de production démarrées, différents schémas d'exploitation du réseau de transport avec potentiellement une liaison électrique hors service... et aussi, dans le cas des installations de stockage rendant un service de réglage primaire de fréquence, différents incidents engendrant un déséquilibre de production-consommation, etc. Notamment, pour un niveau de consommation donné, il peut exister différents plans de production possibles (i.e., le nombre d'installations de production pilotable démarrées, et leur puissance injectée) et donc différents courants possibles dans les liaisons électriques. Il est donc important de tenir compte de ces situations lorsque l'on souhaite estimer la capacité d'accueil du réseau pour les installations de stockage.

En outre, la détermination des capacités d'accueil conjointes de plusieurs points d'un système électrique est un exercice encore plus ardu car l'ajout de toute nouvelle installation de stockage en un point donné change la répartition des courants dans les liaisons électriques (et donc la capacité d'accueil des autres points du système électrique).

### Présentation générale de l'invention

Un but de l'invention est de proposer une méthode pour définir les capacités d'accueil conjointes (en injection et soutirage) de plusieurs points d'un réseau de transport (par exemple, tout ou partie des postes électriques connectés au réseau de transport), susceptibles d'accueillir de nouvelles installations de stockage rendant un service de réglage primaire de fréquence.

L'exemple qui suit permet d'appréhender au moins en partie la difficulté d'identifier la capacité d'accueil dans un réseau de transport.

### Notations

On fait l'hypothèse qu'un nouveau volume de stockage de X1 MW (MW = mégawatt) est attendu à l'échelle d'un réseau de transport constitué de N liaisons électriques (lignes aériennes et/ou câbles souterrains) et de K postes électriques, et que ce volume de stockage peut être réparti sur 1 à M (M≤ K) postes électriques de ce réseau, avec une granularité de X2 MW.

On appelle « combinaison de stockage » toute répartition possible des X1/X2 installations de stockage de X2 MW parmi les M postes électriques du système étudié, sachant qu'un poste électrique peut accueillir zéro, une ou plusieurs installations de stockage de X2 MW.

La méthode proposée a la particularité d'évaluer des capacités d'accueil conjointes des M postes électriques.

La capacité d'accueil d'un poste électrique est ici définie comme la puissance supplémentaire maximale de stockage (multiple de X2 MW), qu'il est possible d'installer en aval de ce poste sans causer des contraintes de transit dans les N liaisons électriques, i.e., sans causer des intensités (ou courants électriques) supérieures aux intensités maximales admissibles des liaisons électriques.

Les capacités d'accueil des postes électriques sont interdépendantes.

### Exemple :

On considère un volume de stockage de X1 = 40 MW à répartir entre M = 4 postes, P1, P2, P3, et P4, avec une granularité X2 = 5 MW. On souhaite savoir si le poste P1 peut accueillir ou non 15 MW de stockage. On s'intéresse alors à toutes les combinaisons de stockage possibles installant une puissance de stockage de 15 MW au poste P1 et 40 - 15 = 25 MW répartis sur les postes P2, P3, et/ou P4.

On observe que certaines combinaisons de stockage (par exemple, 10 MW au poste P2 et 25 - 10 = 15 MW au poste P3) risquent de causer des contraintes de transit dans au moins une liaison électrique. Le poste P1 ne peut donc pas accueillir 15 MW de stockage dans ces conditions.

On observe aussi que d'autres combinaisons de stockage (par exemple, 5 MW au poste P2, 10 MW au poste P3 et 25 - 5 - 10 = 5 MW au poste P4) ne causent pas de contrainte de transit. Il serait alors possible d'installer 15 MW de stockage au poste P1 dans ces conditions.

On voit bien dans cet exemple, que l'on ne peut pas se contenter de dire que le poste P1 a potentiellement une capacité d'accueil de 15 MW mais qu'il faut lister aussi toutes les combinaisons de stockage permettant au poste P1 d'atteindre cette capacité de 15 MW.

Ainsi, pour évaluer les capacités d'accueil conjointes des postes, le procédé proposé permet d'évaluer deux types de capacités d'accueil :
- La capacité maximale d'un poste, que l'on peut définir comme la puissance maximale de stockage pouvant être installée en aval du poste sans causer des contraintes de transit dans certaines conditions.
- La capacité garantie d'un poste que l'on peut définir comme puissance maximale de stockage pouvant être installée en aval du poste sans causer des contraintes de transit quelles que soient les conditions testées.

Plus particulièrement, l'invention propose un procédé de détermination de capacités d'accueil d'installations de stockage d'énergie électrique dans un réseau de transport d'électricité, dans lequel, à partir de la connaissance d'une modélisation du réseau de transport et de situations dimensionnantes identifiées pour celui-ci, on met en œuvre les étapes suivantes :
i. pour chaque situation dimensionnante, détermination des contraintes de transit dans les liaisons électriques du réseau,
ii. pour différentes combinaisons de situations dimensionnantes et de schémas de répartition d'installations de stockage d'énergie en différents points d'installation potentiels sur réseau de transport, on calcule
   a. un flux de puissance statique en régime permanent pour différentes hypothèses de perte ou hausse de production par rapport à la consommation sur le réseau et on vérifie si des contraintes de transit de courant sont apparues et le cas échéant si les éventuelles contraintes de transit identifiées à l'étape précédente se sont aggravées ;
      et/ou
   b. un flux de puissance statique en régime permanent pour différentes hypothèses de charge ou de décharge de ces installations de stockage d'énergie, et on vérifie si des contraintes de transit de courant sont apparues et le cas échéant si les éventuelles contraintes de transit identifiées à l'étape précédente se sont aggravées ;
iii. pour les différentes combinaisons de situations dimensionnantes et de schémas de répartition d'installations de stockage d'énergie, on détermine,
   a) celles qui génèrent ou aggravent les contraintes de transit dans au moins une des hypothèses de perte de production ou de charge,
   b) celles qui ne génèrent et n'aggravent les contraintes de transit dans aucune des hypothèses de perte de production ou de charge.
iv. on déduit de ces résultats une évaluation des capacités d'accueil conjointes aux différents points d'installation potentiels du réseau de transport.

Notamment, on peut déterminer pour chaque point d'installation potentiel sur le réseau de transport la valeur maximale de puissance pouvant être installée audit point parmi toutes les combinaisons de stockage déterminées à l'étape iii.b), cette valeur maximale étant la capacité d'accueil maximale audit point.

Également, on peut déterminer parmi les combinaisons de stockage identifiées à l'étape iii.a), les combinaisons de stockage qui respectent la valeur maximale de puissance de tous les points d'installation potentiels.

Pour chaque point d'installation potentiel sur le réseau de transport, on peut lister toutes les puissances installées de stockage non nulles possibles à ce point d'installation potentiel parmi les combinaisons de stockage qui respectent la valeur maximale de puissance de tous les points d'installation potentiels et
- Si cette liste est vide alors le point d'installation potentiel a une capacité d'accueil garantie égale à sa capacité d'accueil maximale
- Si cette liste contient au moins une valeur de puissance (non nulle), alors le point d'installation a une capacité d'accueil garantie inférieure à la valeur minimale de la liste

En particulier, le point d'installation peut avoir une capacité d'accueil garantie égale à la différence entre la valeur de puissance minimale de la liste et une valeur de granularité de puissance.

Dans un mode de mise en œuvre possible, on met préalablement en œuvre une détermination des situation dimensionnantes en fonction d'un horizon de temps, de moments de l'année pertinents à cet horizon, des consommations des postes électriques du réseau à ces différents moments et des plans de production correspondant.

Par ailleurs, les étapes i. à iv. peuvent être mises en œuvre en prenant en compte à la fois un schéma normal pour le réseau électrique et des schémas dégradés où au moins une liaison est défaillante.

Également, dans une mise en œuvre possible, à l'issue de l'étape i. on identifie les situations dimensionnantes où toutes les liaisons disposent de marges en intensité suffisantes pour accueillir l'ensemble de la puissance supplémentaire envisagées, les étapes ii. et iii. n'étant mises en œuvre que pour les autres situations dimensionnantes.

L'invention propose également une application à la réalisation d'un réseau de transport électrique dans laquelle on met en œuvre un procédé de détermination de capacités d'accueil selon l'une des revendications précédentes et on installe des installations de stockage d'énergie en différents points d'installation potentiels du réseau de transport en fonction de l'évaluation des capacités d'accueil conjointes déterminées pour les différents points d'installation potentiels sur le réseau de transport.

Comme on l'aura compris, la méthode proposée repose sur des calculs de flux de puissance en régime permanent. Cela permet de s'affranchir de la représentation des dynamiques rapides du système électrique et de se concentrer sur l'impact des installations de stockage sur les intensités dans les liaisons électriques. Ainsi, il est possible d'étudier de plus nombreux points de fonctionnement et combinaisons de stockage sur le système étudié, pour un même temps de calcul.

On supposera que la participation des machines synchrones au réglage de fréquence est négligeable par rapport à celle des installations de stockage d'énergie électrique applicables dans le cadre de l'invention, ce qui permettra de faire certaines approximations nécessaires au bon fonctionnement de la méthode proposée.

Dans l'invention, il est possible de déterminer des capacités d'accueil d'un système électrique :
- pour de nouvelles installations de stockage électrique rendant un service rapide de réserve primaire de fréquence,
- dans un système électrique pour lequel on dispose d'un modèle de réseau de transport tel que décrit ci-après,
- en tenant compte de l'interdépendance des capacités d'accueil des différents nœuds du système électrique.

### Brève description des dessins

D'autres caractéristiques et avantages de l'invention ressortiront encore de la description qui suit, laquelle est purement illustrative et non limitative, et doit être lue en regard des figures annexées sur lesquelles :

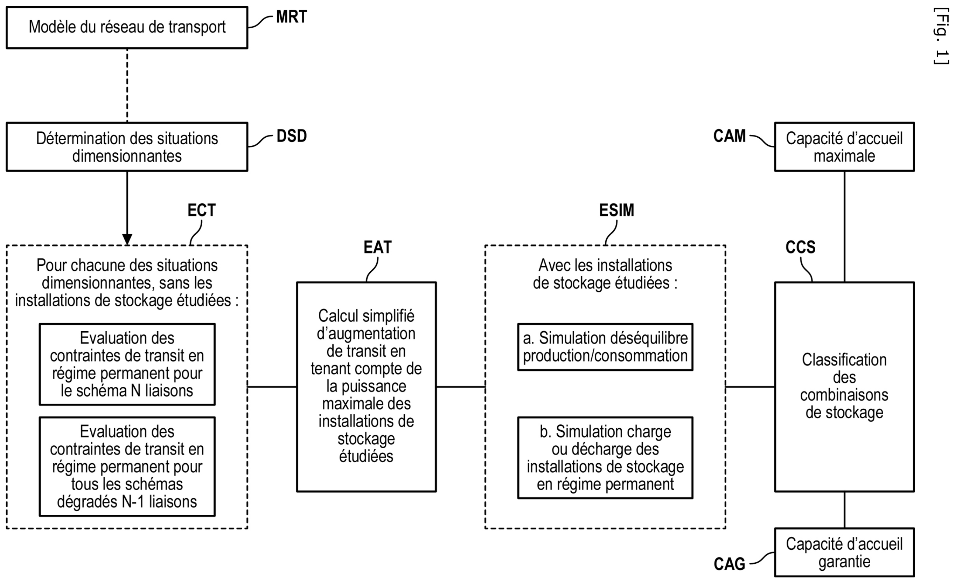

- La figure 1 est une illustration des étapes d'un procédé conforme à un mode de mise en œuvre possible de l'invention pour déterminer les capacités d'accueil d'un réseau de transport pour des installations de stockage rendant un service de réserve primaire de fréquence.

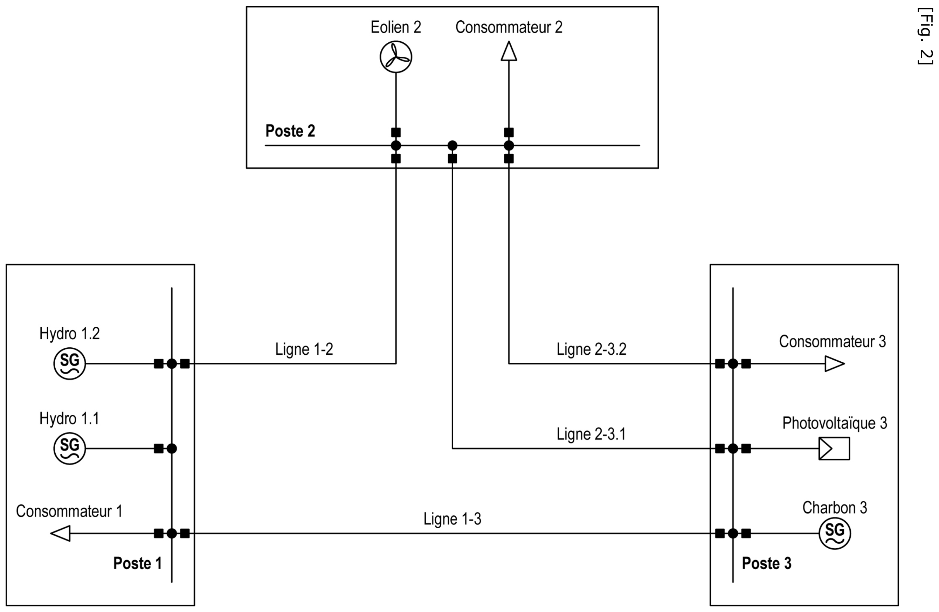

- La figure 2 est un exemple de modèle de réseau de transport sur lequel l'invention pourrait être appliquée.

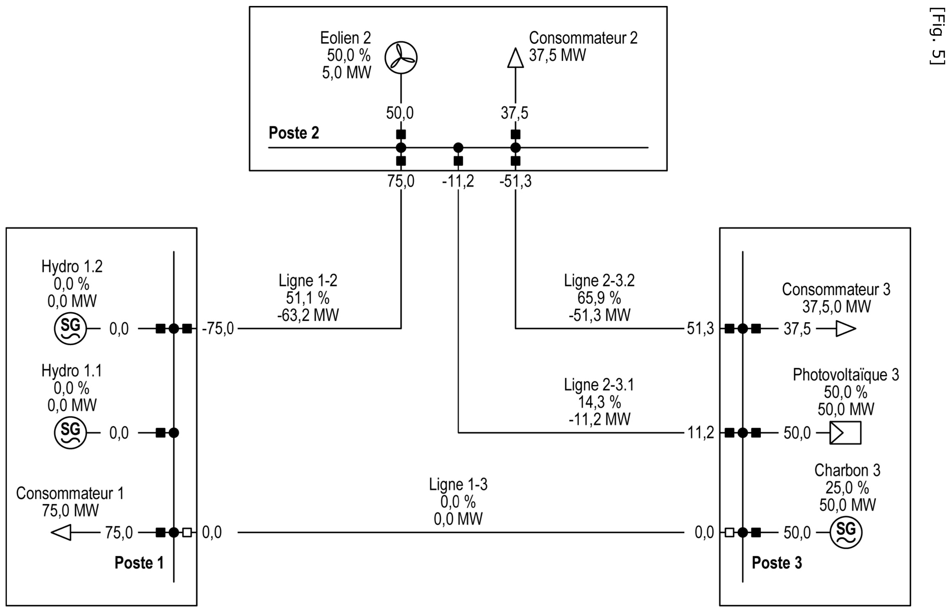

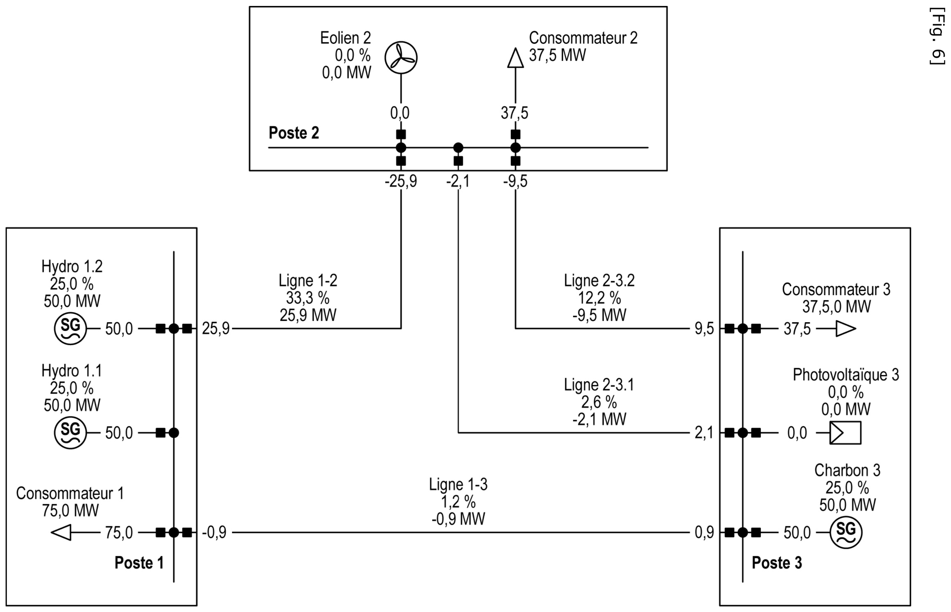

- Les figures 3 à 8 représentent différentes situations de production-consommation sur le modèle de réseau transport décrit en figure 2 ; notamment :
   ∘ **Les Erreur ! Source du renvoi introuvable.** et **Erreur ! Source du renvoi introuvable.** illustrent deux plans de production possibles, l'un avec forte hydraulicité (figure 3), l'autre sans hydraulicité (figure 4).
   ∘ La figure 5 montre la répartition des transits de puissance dans les lignes du réseau de transport lorsque le plan de production de la figure 4 est appliqué et que la ligne 1-3 est hors service.
   ∘ La figure 6 est une situation particulière où les marges de transits sont suffisantes (< 100 %) dans chaque ligne du réseau de transport pour accueillir toutes les combinaisons de stockage.
   ∘ La figure 7 décrit une autre situation dans laquelle se produit la perte d'une installation de production hydraulique et une compensation de cette perte par une combinaison de stockage composée de 3 unités d'installations;
   ∘ Enfin la figure 8 décrit une autre situation dans laquelle une combinaison de stockage composée d'installations de stockage réparties sur 3 postes et soutirant une puissance totale de 50 MW pour restaurer la réserve primaire, avec un plan de production adaptée ;

### Description d'un ou plusieurs modes de mise en œuvre et de réalisation

### Modèle de réseau de transport

Dans une phase préliminaire, le procédé proposé suppose de disposer d'un modèle du réseau de transport MRT que l'on souhaite étudier. Ce modèle doit comprendre :
- une représentation des ouvrages de réseau (lignes et câbles, jeux de barres),
- une représentation des installations/centrales de production (pilotables) raccordées directement à ce réseau,
- des représentations agrégées de la consommation et de la production issues des réseaux de distribution, au niveau de chaque poste électrique,
- une représentation des éventuelles installations de stockage d'énergie électrique déjà installées.

Ce modèle doit contenir aussi les informations suffisantes (impédances électriques, régulations de puissance et/ou tension, etc.) pour pouvoir estimer les transits de courant dans les liaisons électriques en régime permanent (« calcul de flux de puissance ») lorsqu'on renseigne des valeurs de puissance aux consommateurs et aux producteurs non pilotables. On connait les intensités maximales admissibles (potentiellement saisonnalisées) de toutes les liaisons électriques.

L'exemple d'un tel modèle est donné en Erreur ! Source du renvoi introuvable., avec N = 4 liaisons électriques et K = 3 postes électriques.

Ce modèle est constitué de N = liaisons électriques et de M = 3 postes électriques (représentés par des rectangles). Chacun des postes accueille de la consommation (symbole triangle), des machines synchrones telles que des groupes de production hydraulique ou thermique charbon (symbole rond avec sigle "SG"), des sites de production éolienne (symbole rond avec image de 3 pâles) et/ou des sites de production photovoltaïque (symbole rectangle avec triangle imbriqué). Les lignes sont nommées en fonction des postes qu'elles connectent, sans présupposer des sens des transits de puissance entre ces postes.

Les figures et symboles de cette figure et des figures suivantes ont été réalisées sur la base du logiciel Powerfactory de la société Digsilent, largement utilisé dans le domaine.

Les centrales de production conventionnelles (machines synchrones) sont munies d'un réglage primaire de fréquence, c'est-à-dire qu'elles modulent leur production d'électricité en fonction des variations de fréquence. Leur participation au réglage de fréquence est supposée négligeable en comparaison avec les installations de stockage d'énergie électrique étudiées. Cela permet de faire l'hypothèse suivante : Sur un événement engendrant une forte variation de fréquence, dit « incident », on suppose que seules les installations de stockage d'énergie électrique rendant un service de réglage de fréquence répondent à cette variation de fréquence, et prennent donc en charge l'ensemble de la puissance électrique nécessaire pour retrouver l'équilibre production-consommation.

Par exemple, si on installe 20 MW de stockage d'énergie électrique réalisant un service de réglage de fréquence électrique sur le système étudié, et que l'on simule un incident entraînant une perte de production de 15 MW, on suppose que seules les installations de stockage vont augmenter leur puissance afin d'atteindre 15 MW de production supplémentaire sur le réseau. Les installations de production injectent, quant à elles, la même puissance que celle qu'elles injectaient avant incident.

On décrit ci-après différentes étapes d'un procédé de détermination de capacité d'accueil des postes électriques pour des installations de stockage d'énergie électrique rendant un service de réglage primaire de fréquence

### Détermination des situations dimensionnantes

Dans une première étape DSD, on définit les situations dimensionnantes qui seront utilisées pour établir la capacité d'accueil de chaque poste électrique du système étudié.

En effet, on ne peut pas étudier toutes les situations de production et de consommation possibles sur le système étudié. Il faut faire des choix en adéquation avec les caractéristiques, les spécificités, les besoins du système étudié et les exigences de fonctionnement des installations de stockage imposées par le gestionnaire de réseau.

A cet effet, dans une première sous-étape de cette étape DSD, on choisit les situations de consommation à étudier.

Ce choix est mis en œuvre avec les critères suivants.
i. Tout d'abord, on détermine à quel horizon de temps on souhaite se placer. Comme les installations de stockage seront installées sur plusieurs années, il n'est pas forcément pertinent de les étudier uniquement sur les conditions actuelles du réseau. A l'inverse, prendre une année trop éloignée peut rendre complexe l'adéquation avec les autres données de l'étude, dont la modélisation peut devenir plus incertaine.
ii. Ensuite, on détermine des moments de l'année qui semblent pertinents pour la sollicitation des nouvelles installations de stockage. On pourra notamment choisir des pointes et des creux de consommation dans la journée et le soir, notamment afin d'avoir des profils de production d'énergie renouvelable différents pendant ces pics et creux de consommation. Si le placement géographique du système électrique le rend susceptible de subir une saisonnalité, alors il est intéressant d'étudier des points de consommation de saisons différentes.
iii. Enfin, on définit la répartition de la consommation entre les postes électriques pour ces différents moments.

Dans une deuxième sous étape de l'étape DSD, pour chaque situation de consommation ainsi définie, on détermine des plans de production, i.e., les installations de production démarrées / en service et la puissance injectée par les installations pour garantir l'équilibre production-consommation du système électrique. Pour une même situation de consommation, plusieurs plans de production peuvent être générés avec différentes hypothèses de production d'énergie renouvelable, les installations de production pilotable (ex : groupes thermiques) venant compléter la production manquante. On génère également des plans de production en supposant certaines installations de production non démarrées, par exemple pour cause de maintenance. Ces plans de production sont choisis afin d'être à la fois réalistes et susceptibles de causer des intensités dans les liaisons électriques potentiellement élevées, et donc contraignantes vis-à-vis des puissances injectées/soutirées par les futures installations de stockage d'énergie électrique.

Les **Erreur ! Source du renvoi introuvable.** et **Erreur ! Source du renvoi introuvable.** illustrent deux plans de production possibles i.e. le nombre d'installations de production pilotable démarrées et leur puissance injectée, pour le réseau de la **Erreur ! Source du renvoi introuvable.** et une consommation totale de 150 MW, selon la disponibilité des ressources (soleil, vent et hydraulicité) :

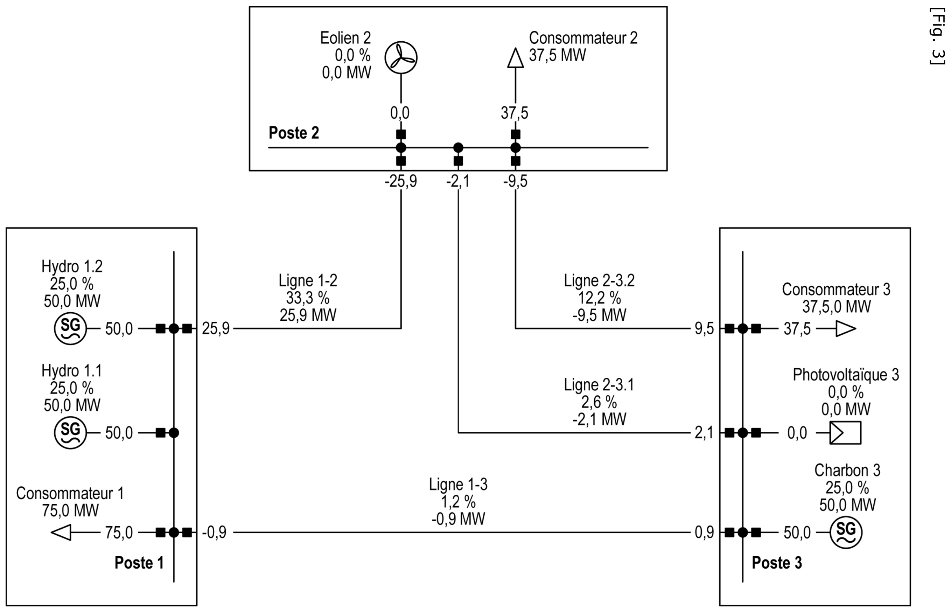

La figure 3 est un exemple de plan de production avec forte hydraulicité, sans vent ni soleil.

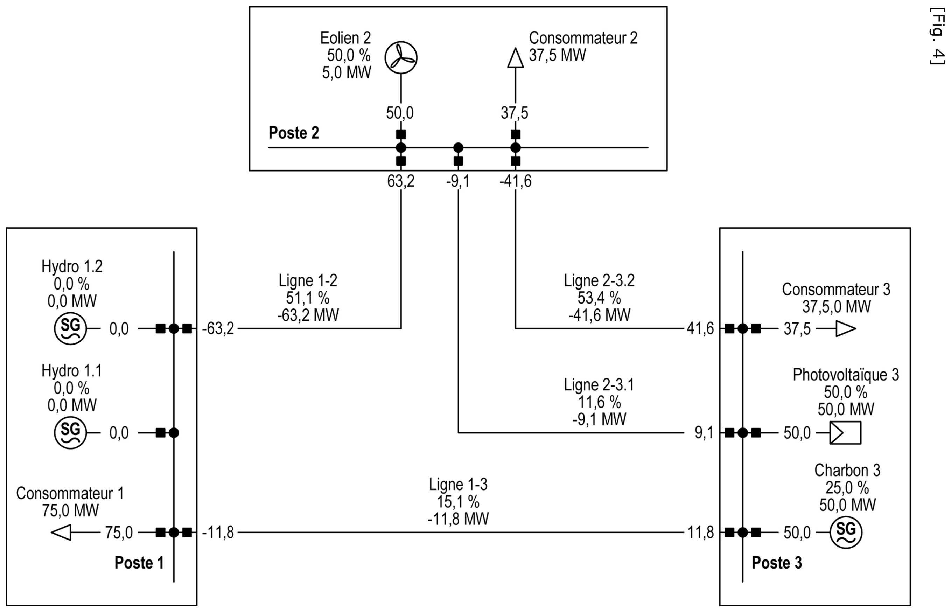

La figure 4 est un exemple de plan de production sans hydraulicité, avec vent et soleil.

Dans la Figure 3, la production hydraulique est élevée mais il n'y a pas de vent (éolien) et pas de soleil (photovoltaïque), alors que dans la Figure 4, il y a beaucoup de vent (éolien) et de soleil (photovoltaïque) et une production hydraulique nulle.

Dans une deuxième étape ECT, en l'absence des nouvelles installations de stockage attendues, et pour chaque situation dimensionnante établie à l'étape DSD, on évalue, par un calcul de flux de puissance en régime permanent, les contraintes de transit (i.e., les intensités dans les liaisons électriques qui sont supérieures à l'intensité maximale admissible de ces liaisons).

Cette évaluation se fait a minima sur le schéma normal de réseau « N liaisons » (i.e., avec toutes les liaisons du réseau de transport disponibles).

Elle se fait également si possible sur chacun des N-1 schémas dégradés de réseau « N-1 liaisons » (i.e., avec une liaison indisponible parmi les N liaisons). Il est avantageux de tester tous les schémas à « N-1 liaisons » car :
a) un plan de production pour un réseau de transport doit si possible être robuste à tout événement correspondant à la perte d'un ouvrage électrique et notamment d'une liaison,
b) le système doit, si possible, continuer à fonctionner normalement en cas de perte d'une liaison, sans contrainte de transit sur les N-1 liaisons disponibles.

Les résultats de cette deuxième étape permettent de connaitre la situation initiale de chaque situation dimensionnante de l'étape DSD avant de tester l'installation des nouvelles installations de stockage d'énergie électrique.

La **Erreur ! Source du renvoi introuvable.** présente un exemple de calcul de flux de puissance sur un schéma « N-1 liaisons » (« Ligne 1-3 » hors service) du réseau de la **Erreur ! Source du renvoi introuvable**. : l'intensité de la liaison « Ligne 1-2 » est ici égale à 96,2 % de son intensité maximale admissible.

Dans une troisième étape, optionnelle (étape EAT), pour réduire le nombre de calculs de flux de puissance à réaliser dans les étapes suivantes, on peut réaliser un premier calcul simplifié de l'augmentation de transit pour chaque liaison et pour chaque cas étudié (c'est-à-dire, pour chaque couple de situation dimensionnante de l'étape DSD et de schéma de réseau) en supposant que la liaison devait transiter une puissance supplémentaire de X1 MW.

Il ne s'agit pas d'un calcul de flux de puissance, mais uniquement d'un calcul à partir des valeurs de tension et puissances récupérées à chaque extrémité de la liaison (issues du calcul réalisé à l'étape ECT). La **Erreur ! Source du renvoi introuvable.** illustre un cas où toutes les liaisons disposent de marges suffisantes en intensité (< 100 %) pour permettre l'accueil de toute combinaison de stockage, c'est à dire chaque ligne du réseau de transport peut accueillir toutes les combinaisons de stockage.

On ne réalise alors les étapes suivantes uniquement sur les cas susceptibles de pouvoir générer ou aggraver une contrainte de transit après application de ce calcul simplifié.

### Simulation déséquilibre production/ onsommation (ESIM - a/)

Dans une quatrième étape, pour toutes les combinaisons de stockage possibles sur les postes électriques, et pour tous les cas de situations dimensionnantes et de schémas de réseau (ou uniquement pour les cas contraints identifiés à l'étape EAT), simuler la fourniture d'une réserve primaire à la hausse des systèmes de stockage à la suite d'un déséquilibre entre la production et la consommation, dans le cas ici, une perte de production sur le système électrique (cas injection). L'invention ici peut aussi s'appliquer dans le cadre d'un déséquilibre production/puissance lorsqu'il y a une baisse de la consommation.

Plusieurs pertes de production unitaires (de différentes puissances et/ou à différents emplacements) peuvent être simulées, pourvu que la puissance perdue reste inférieure à la puissance totale de stockage installée et prévue sur le réseau (*X₁* MW). Si on souhaite vérifier que l'ensemble des installations de stockage (existantes et nouvelles) sont suffisantes pour compenser la perte de production, il faut a minima tester des événements/incidents dont la puissance perdue correspond à la somme des puissances installées de stockage existant et nouveau. Comme décrit précédemment, on suppose que la perte de puissance est entièrement compensée par la puissance injectée par les installations de stockage rendant un service de réglage primaire de fréquence. Ainsi, pour chaque quadruplet {combinaison de stockage - situation dimensionnante - schéma de réseau - déséquilibre (ici perte de production)}, on réalise un calcul de flux de puissance statique (en régime permanent) correspondant à cette nouvelle répartition de la puissance sur le système électrique.

On vérifie alors si des contraintes de transit de courant sont apparues (et si les éventuelles contraintes de transit identifiées à l'étape 1 se sont aggravées).

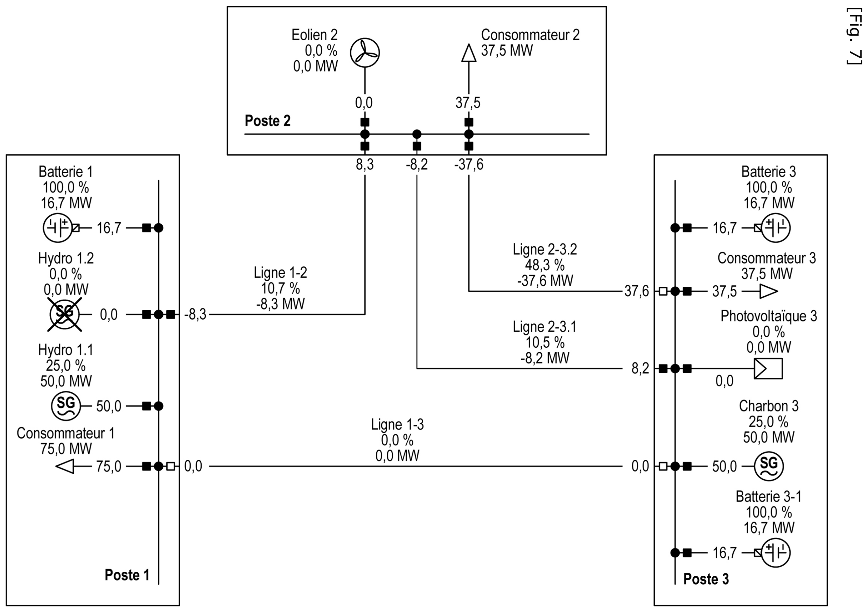

Cette étape est illustrée en **Erreur ! Source du renvoi introuvable.,** en considérant la situation dimensionnante de la **Erreur ! Source du renvoi introuvable.**, la perte d'une installation de production hydraulique qui injectait 50 MW, et une combinaison de stockage qui est composée de 3 installations de stockage réparties sur 2 postes et qui fournit une réserve primaire à la hausse égale à la puissance perdue (50 MW). Plus précisément la figure 7 montre la répartition des transits de puissance dans les lignes du réseau de transport lorsque le plan de production de la figure 3 est appliqué, la ligne 1-3 est hors service, la puissance du groupe hydraulique Hydro 1.2 (initialement 50 MW) est soudainement perdue, et trois installations de stockage fournissent une réserve primaire à la hausse (3 * 16,7 MW = 50 MW) pour compenser la perte du groupe Hydro 1.2

### Simulation d'une charge des installations de stockage (ESIM - b/)

Dans une cinquième étape, pour toutes les combinaisons de stockage possibles sur les postes électriques, et pour tous les cas de situations dimensionnantes et de schémas de réseau (ou uniquement pour les cas contraints identifiés à l'étape EAT), simuler une charge des installations de stockage (à puissance maximale ou réduite, selon les conditions de fonctionnement que le gestionnaire de réseau souhaite autoriser) en vue de restaurer leur réserve primaire à la hausse (cas soutirage). Les incidents de l'étape ESIM - a) ne sont plus présents, le système électrique fonctionne en conditions normales. Le plan de production est adapté pour que les installations de production pilotables injectent une puissance supplémentaire égale à la puissance soutirée par les installations de stockage.

On vérifie si des contraintes de transit de courant sont apparues (et si les éventuelles contraintes de transit identifiées à l'étape DSD se sont aggravées).

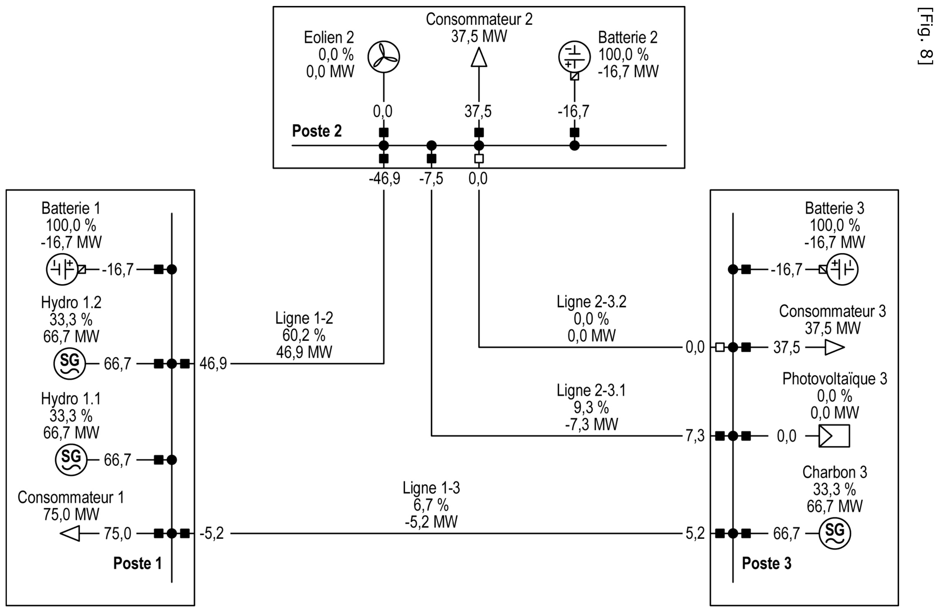

Cette étape est illustrée en **Erreur ! Source du renvoi introuvable.,** en considérant la situation dimensionnante de la **Erreur ! Source du renvoi introuvable..** Plus précisément, la Figure 8 montre la répartition des transits de puissance dans les lignes du réseau de transport lorsque 3 installations de stockage se rechargent pour restaurer leurs réserves primaires pour la situation représentée dans la Figure 3 avec un plan de production adapté (puissance des machines synchrones des installations de production hydraulique et thermique augmentée pour couvrir la consommation supplémentaire de 3 * 16.7 MW = 50 MW) et la ligne 2-3.2 est hors service

### Classification des combinaisons de stockage

Dans une sixième étape CCS, à partir des résultats des étapes ESIM-a/ et ESIM-b/ , répartir les combinaisons de stockage testées en deux ensembles mutuellement exclusifs :
a) l'ensemble des combinaisons de stockage qui génèrent ou aggravent les contraintes de transit sur au moins un des cas étudiés à l'étape ESIM-a/ ou ESIM-b/,
b) l'ensemble des combinaisons de stockage qui ne génèrent pas et n'aggravent pas les contraintes de transit sur aucun des cas étudiés aux ESIM-a/ et ESIM-b/.

### Détermination des capacités d'accueil

Dans une septième étape, on déduit des résultats précédents les capacités d'accueil conjointes des postes électriques en injection et soutirage, avec une granularité de X2 MW (étant donné un volume total de stockage de X1 MW) :
Dans un premier temps, on détermine la capacité d'accueil maximale de chaque poste (étape CAM) : il s'agit de la valeur maximale de puissance installée de stockage au poste parmi toutes les combinaisons de stockage identifiées à l'étape CCS b).

Ensuite, on détermine la capacité d'accueil garantie de chaque poste (étape CAG).

A cet effet, parmi les combinaisons de stockage identifiées à l'étape CCS b) retenir uniquement les combinaisons de stockage qui respectent les capacités d'accueil maximales de tous les postes. Par exemple, pour le réseau de la **Erreur ! Source du renvoi introuvable.,** si les postes 1, 2 et 3 ont respectivement une capacité maximale de 5 MW, 10 MW et 0 MW (capacité nulle au poste 3), alors sélectionner uniquement les combinaisons de l'étape CCS b) dont la puissance installée de stockage au poste 1 est inférieure ou égale à 5 MW, la puissance installée de stockage au poste 2 inférieure ou égale à 10 MW et la puissance installée de stockage au poste 3 inférieure ou égale à 0 MW (aucune installation possible audit poste).

Pour chaque poste, on liste toutes les puissances installées de stockage non nulles possibles à ce poste parmi les combinaisons de stockage retenues à l'étape 7:
Si cette liste est vide alors le poste a une capacité d'accueil garantie égale à sa capacité d'accueil maximale.
Si cette liste contient au moins une valeur de puissance (non nulle), alors le poste a une capacité d'accueil garantie égale à :
   X3 = valeur de puissance minimale de la liste - X2.

De nombreuses variantes du procédé proposé sont bien entendu envisageables.

Il est possible de réaliser les étapes ci-dessus en limitant le volume maximal de stockage installé sur un poste électrique donné.

Il est également possible de choisir quelles installations de stockage servent de réserve rapide (réserve primaire) sur les installations.

Dans d'autres modes de mises en œuvre encore, on utilise la méthode ci-dessus pour des installations de stockage rendant un service de réserve primaire de fréquence à la baisse en plus d'un service de réserve primaire de fréquence à la hausse. Pour ce faire, il suffit d'ajouter deux étapes avant l'étape CCS :
- une étape similaire à l'étape ESIM-a/ en remplaçant les incidents/événements de perte de production par des incidents/événements entrainant une production supérieure à la consommation dans le système (ex : perte fortuite de consommateurs, augmentation fortuite de la production non pilotable...).
- une étape similaire à l'étape ESIM-b/ en simulant une décharge des installations de stockage plutôt qu'une charge.

Il est possible aussi d'étudier des installations de stockage rendant un service de réserve primaire de fréquence à la baisse à la place d'un service de réserve primaire de fréquence à la hausse, en remplaçant les étapes ESIM-a/ et ESIM-b/ par les étapes ci-dessus.

Il est également possible d'utiliser la méthode ci-dessus en considérant, en phase de construction de plans de production, des indisponibilités d'installations de production (par exemple dans le cadre de maintenances planifiées) (étape ECT).

Il est également possible de réaliser les étapes ci-dessus en considérant une puissance de recharge des installations de stockage inférieure à leur puissance installée (étape ESIM - b), cas soutirage).

Il est également possible de simuler la recharge des installations de stockage uniquement sur les situations de consommation-production-schéma de réseau pour lesquelles le gestionnaire de réseau autoriserait effectivement les installations de stockage à se recharger (étape ESIM - b), cas soutirage).

Il est également possible de considérer que certaines des installations de stockage étudiées ne fournissent pas de réserve primaire dans certaines situations de consommation-production-schéma de réseau (étape ESIM - a), cas injection).

Il est également possible de déterminer les capacités d'accueil des postes uniquement en injection, en supprimant l'étape ESIM - b).

Il est possible aussi de déterminer des capacités d'accueil plus élevées, en autorisant par exemple les combinaisons de stockage susceptibles d'augmenter faiblement les contraintes de transit identifiées à l'étape DSD (seuil de tolérance à définir) et/ou de causer des contraintes de transit sur certaines liaisons (à définir) dans des situations données (à définir). Il suffit d'adapter la définition des deux ensembles de combinaisons de stockage de l'étape CCS, en veillant à ce qu'ils restent mutuellement exclusifs.

Le procédé proposé est avantageusement utilisé lors de la réalisation d'un réseau de transport électrique.

On met alors en œuvre un procédé de détermination de capacités d'accueil tels que décrit ci-dessus et on installe des installations de stockage d'énergie en différents points d'installation potentiels du réseau de transport en fonction de l'évaluation des capacités d'accueil conjointes déterminées pour les différents points d'installation potentiels sur le réseau de transport.

Ce procédé trouve avantageusement application dans le cas où le réseau de transport électrique est un réseau insulaire. Par insulaire, on entend ici un système ne bénéficiant pas d'interconnexion à un réseau électrique continental, ou n'en bénéficiant que de façon limitée.

Le procédé est également applicable pour des systèmes électriques dans lesquels une modélisation de l'ensemble des moyens participant au réglage primaire de fréquence est réalisable.

## Revendications

1. Procédé de détermination de capacités d'accueil d'installations de stockage d'énergie électrique dans un réseau de transport d'électricité, dans lequel, à partir de la connaissance d'une modélisation du réseau de transport et de situations dimensionnantes identifiées pour celui-ci, les étapes suivantes sont mises en œuvre :
i. pour chaque situation dimensionnante, détermination des contraintes de transit dans les liaisons électriques du réseau,
ii. pour différentes combinaisons de situations dimensionnantes et de schémas de répartition d'installations de stockage d'énergie en différents points d'installation potentiels sur réseau de transport, calcul
a. d'un flux de puissance statique en régime permanent pour différentes hypothèses de perte ou hausse de production par rapport à la consommation sur le réseau et vérification de ce que des contraintes de transit de courant sont apparues et le cas échéant de ce que les éventuelles contraintes de transit identifiées à l'étape précédente se sont aggravées ;
et/ou
b. d'un flux de puissance statique en régime permanent pour différentes hypothèses de charge ou de décharge de ces installations de stockage d'énergie, et vérification de ce que des contraintes de transit de courant sont apparues et le cas échéant de ce que les éventuelles contraintes de transit identifiées à l'étape précédente se sont aggravées ;
iii. pour les différentes combinaisons de situations dimensionnantes et de schémas de répartition d'installations de stockage d'énergie, détermination de,
a) celles qui génèrent ou aggravent les contraintes de transit dans au moins une des hypothèses de perte de production ou de charge,
b) celles qui ne génèrent et n'aggravent les contraintes de transit dans aucune des hypothèses de perte de production ou de charge.
iv. déduction de ces résultats d'une évaluation des capacités d'accueil conjointes aux différents points d'installation potentiels du réseau de transport.

2. Procédé selon la revendication 1, dans lequel pour chaque point d'installation potentiel sur le réseau de transport la valeur maximale de puissance pouvant être installée audit point parmi toutes les combinaisons de stockage déterminées à l'étape iii.b) est déterminée, cette valeur maximale étant la capacité d'accueil maximale audit point.

3. Procédé selon la revendication 1 ou la revendication 2, dans lequel parmi les combinaisons de stockage identifiées à l'étape iii.a), les combinaisons de stockage qui respectent la valeur maximale de puissance de tous les points d'installation potentiels sont déterminées.

4. Procédé selon la revendication 3 dans lequel, pour chaque point d'installation potentiel sur le réseau de transport, toutes les puissances installées de stockage non nulles possibles à ce point d'installation potentiel parmi les combinaisons de stockage qui respectent la valeur maximale de puissance de tous les points d'installation potentiels sont listées et
- Si cette liste est vide alors le point d'installation potentiel a une capacité d'accueil garantie égale à sa capacité d'accueil maximale
- Si cette liste contient au moins une valeur de puissance (non nulle), alors le point d'installation a une capacité d'accueil garantie inférieure à la valeur minimale de la liste

5. Procédé selon la revendication 4 dans lequel le point d'installation a une capacité d'accueil garantie égale à la différence entre la valeur de puissance minimale de la liste et une valeur de granularité de puissance.

6. Procédé selon l'une des revendications précédentes dans lequel une détermination des situation dimensionnantes est mise en œuvre en fonction d'un horizon de temps, de moments de l'année pertinents à cet horizon, des consommations des postes électriques du réseau à ces différents moments et des plans de production correspondant.

7. Procédé selon l'une des revendications précédentes dans lequel les étapes i. à iv. sont mises en œuvre en prenant en compte à la fois un schéma normal pour le réseau électrique et des schémas dégradés où au moins une liaison est défaillante.

8. Procédé selon l'une des revendications précédentes dans lequel à l'issue de l'étape i. sont identifiées les situations dimensionnantes où toutes les liaisons disposent de marges en intensité suffisantes pour accueillir l'ensemble de la puissance supplémentaire envisagées, les étapes ii. et iii. n'étant mises en œuvre que pour les autres situations dimensionnantes.

9. Application à la réalisation d'un réseau de transport électrique dans laquelle un procédé de détermination de capacités d'accueil selon l'une des revendications précédentes est mis en œuvre et des installations de stockage d'énergie en différents points d'installation potentiels du réseau de transport sont installées en fonction de l'évaluation des capacités d'accueil conjointes déterminées pour les différents points d'installation potentiels sur le réseau de transport.

10. Application selon la revendication 9, dans laquelle le réseau de transport électrique est un réseau insulaire.
